# EUROPEAN PATENT APPLICATION

(11) **EP 4 625 651 A2**
(43) Date of publication of application: **01.10.2025**
(21) Application number: 25194916.0
(22) Date of filing: 01.07.2022
(51) Int. Cl.: H01M 50/209

(54) **COOLING FIN, BATTERY MODULE, BATTERY PACK AND DEVICE INCLUDING THE SAME**

(30) Priority: 02.07.2021 KR 20210086817; 06.12.2021 KR 20210172790
(62) Divisional of application: 22833719.2
(71) Applicant: LG Energy Solution, Ltd., Seoul 07335 (KR)
(72) Inventor: YOON, Han Ki, 34122 Daejeon (KR); CHO, Young Bum, 34122 Daejeon (KR); YU, Sanghyun, 34122 Daejeon (KR); NAMGOUNG, Hyeok, 34122 Daejeon (KR); KU, Wonhoe, 34122 Daejeon (KR); JEONG, Ji Won, 34122 Daejeon (KR)
(74) Representative: Plasseraud IP

(57) **Abstract**

A cooling fin according to an embodiment of the present disclosure forms a heat transfer path between a battery cell and a heat sink, wherein the cooling fin comprises a body part located in parallel with the battery cell, and an extension part extending from one end of the body part toward the heat sink, and wherein the extension part has a round shape that is curved to have a curvature.

## Description

### [TECHNICAL FIELD]

### Cross Citation with Related Application(s)

This application claims the benefit of Korean Patent Application No. 10-2021-0086817 filed on July 2, 2021 and Korean Patent Application No. 10-2021-0172790 filed on December 6, 2021 in the Korean Intellectual Property Office, the contents of which are incorporated herein by reference in their entirety.

The present disclosure relates to a cooling fin, a battery module, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

Meanwhile, in the case of a secondary battery used for small-sized devices, two to three battery cells are used, but in the case of a secondary battery used for a middle- or large-sized device such as an automobile, a middle- or large-sized battery module in which a large number of battery cells are electrically connected is used. Since the middle or large-sized battery module is preferably manufactured so as to have as small a size and weight as possible, a prismatic battery, a pouch-shaped battery or the like, which can be stacked with high integration and has a small weight relative to capacity, is mainly used as a battery cell of the middle or large-sized battery module.

Meanwhile, the battery cell mounted onto the battery module may generate a large amount of heat in the charge and discharge process. If the temperature becomes higher than an appropriate temperature due to overcharging or the like, the performance may deteriorate. If the temperature rise is excessive, there is a risk of explosion or ignition. If an ignition phenomenon occurs inside the battery module, high-temperature heat, gas, or flame may be emitted to the outside of the battery module, wherein the heat, gas, spark or flame emitted from one battery module may be transmitted to other adjacent battery modules at a narrow interval within the battery pack, which can lead to a cascading thermal runaway phenomenon within the battery pack.

In order to prevent such a thermal runaway phenomenon, the conventional battery module is provided with a cooling member, a heat dissipation member or the like. In recent years, attempts have been made to apply a water-cooled type cooling member or a water-cooled type heat dissipation member into which cooling water is injected. However, even if a cooling (heat dissipation) member is provided in the battery module, a separation space is formed between the cooling (heat dissipation) member and the battery cells for assembly or design reasons, which causes a problem that the function of the cooling (heat dissipation) member is not sufficiently exhibited due to an air gap according to the separation space.

Therefore, there is a need for a technique capable of solving the above problems of the conventional techniques.

### [DETAILED DESCRIPTION OF THE INVENTION]

### [Technical Problem]

It is an object of the present disclosure to provide a battery pack capable of minimizing the deterioration in cooling performance due to the air gap between the cooling member and the battery cell, and a device including the same.

It is another object of the present disclosure to provide a cooling fin that can stably form a contact surface with the heat sink, and a battery module and a battery pack including the same.

However, the problem to be solved by the embodiments of the present disclosure is not limited to the above-described problems, and can be variously expanded within the scope of the technical idea included in the present disclosure.

### [Technical Solution]

According to an embodiment of the present disclosure, there is provided a battery pack comprising: a battery module including a battery cell stack in which a plurality of battery cells are stacked, a pack frame for accommodating the battery module, and a heat sink located between the battery cell stack and the pack frame, wherein a cooling fin is arranged between the two battery cells adjacent to each other, wherein the cooling fin comprises a body part in contact with the battery cell, and an extension part extending to the upper side (z-axis) of the battery cell stack and located adjacent to the heat sink, and wherein the extension part has a bent part formed by bending in a direction different from the upper side (z-axis).

The heat sink is located outside the battery module, and the extension part may make contact with the heat sink.

The bent part formed in the extension part may have an L-shaped spring shape or an S-shaped spring shape.

The cooling fin may be an elastic body.

The bent part may be deformable according to a distance between the battery cell stack and the heat sink.

The battery pack may further comprise a heat dissipation layer formed between the battery cell stack and the heat sink.

The heat dissipation layer may be disposed discontinuously in the stacking direction of the battery cell stack.

The cooling fins are formed in two or more numbers, the two or more cooling fins are disposed at intervals from each other, and the heat dissipation layer may be formed in plural numbers so as to correspond to the two or more cooling fins, respectively.

The heat dissipation layer may make contact with the extension part.

The heat dissipation layer may be located closer to a second point, which is a terminal end of the extension part, than a first point at which the body part and the extension part make contact with each other.

The heat dissipation layer may make contact with the extension part and the heat sink.

The battery module may comprise a side plate in contact with the outermost battery cell of the battery cell stack.

The side plate is configured as at least two side plates, the battery cell stack is disposed between the two side plates, and a relative positional relationship between the two side plates and the battery cell stack may be fixed by a holding strap.

The holding strap comprises a hook formed at the terminal end in the longitudinal direction, and a hook groove corresponding to the hook may be formed in the side plate.

According to another embodiment of the present disclosure, there is provided a device comprising at least one battery pack described above.

According to another embodiment of the present disclosure, there is provided a cooling fin that forms a heat transfer path between a battery cell and a heat sink, wherein the cooling fin comprises a body part located in parallel with the battery cell, and an extension part extending from one end of the body part toward the heat sink, and wherein the extension part has a round shape that is curved to have a curvature.

The extension part comprises a first point having a first curvature and a second point having a second curvature, and the first curvature and the second curvature may be different from each other.

The extension part comprises a first point having a first slope and a second point having a second slope, and the first slope and the second slope may be different from each other.

The absolute value of the first slope on the cross section of the extension part is smaller than the absolute value of the second slope, and the first point may be located farther from one end of the body part than the second point.

The first point may be located closer to the heat sink than the second point.

The second point may be in non-contact with the heat sink.

The extension part may be deformable according to a distance between the battery cell and the heat sink.

The extension parts are formed in plural numbers on one cooling fin.

A heat dissipation layer is located between the battery cell stack in which the plurality of battery cells are stacked and the heat sink, and the extension part may make contact with the heat dissipation layer.

The heat dissipation layer is formed in plural numbers, the extension part is formed in plural numbers in one cooling fin, and the plurality of heat dissipation layers may correspond to a plurality of extensions formed on one cooling fin, respectively.

The heat dissipation layer may be disposed discontinuously in the stacking direction of the battery cell stack.

The cooling fins are formed in two or more numbers, and the two or more cooling fins are disposed at intervals from each other, and the heat dissipation layer may be formed in plural numbers so as to correspond to the two or more cooling fins, respectively.

The heat dissipation layer may make contact with the extension part and the heat sink.

According to yet another embodiment of the present disclosure, there is provided a battery module comprising at least one cooling fin described above.

According to a further embodiment of the present disclosure, there is provided a battery pack comprising at least one cooling fin described above.

### [Advantageous Effects]

According to embodiments of the present disclosure, by minimizing the deterioration of the cooling performance due to an air gap between the cooling member and the battery cell, the heat inside the battery pack can be effectively removed, and a cascading thermal runaway phenomenon can be prevented.

Further, according to embodiments, by stably forming the contact surface of the heat sink and the cooling fin, heat dissipation of the battery cells can be promoted, and a cascading thermal runaway phenomenon can be prevented.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view which shows a battery pack according to an embodiment of the present disclosure;
Fig. 2 is a perspective view of a battery module included in the battery pack according to Fig. 1;
Fig. 3 is a perspective view of a heat sink included in the battery pack according to Fig. 1;
Fig. 4 is a cross-sectional view of the battery pack of Fig. 1 cut along the yz plane;
Fig. 5 is a cross-sectional view which shows a modification of the battery pack of Fig. 4;
Fig. 6 is a diagram which shows a case where a heat dissipation layer is provided in the battery pack of Fig. 4;
Fig. 7 is a diagram which shows an example of a battery module or battery pack equipped with a cooling fin according to another embodiment of the present disclosure;
Fig. 8 is a diagram which shows another example of a battery module or battery pack equipped with a cooling fin according to another embodiment of the present disclosure;
Fig. 9 is a perspective view of a cooling fin according to embodiments of the present disclosure; and
Fig. 10 is a diagram which shows an experiment and its results for confirming the size of the contact surface that is formed differently depending on the shape of the cooling fin.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, since the upper surface/lower surface of a specific member can be determined differently depending on which direction is used as a reference direction, the 'upper surface' or 'lower surface' as used herein is defined as meaning two surfaces facing each other on the z-axis of the member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, a battery pack according to an embodiment of the present disclosure will be described.

First, the cooling fin of the present embodiment can be provided between the battery cells in the battery pack or battery module, and may be for maintaining the temperature in the battery pack or battery module within an appropriate range by promoting heat dissipation of the battery cells. At this time, a heat sink can be located on the upper side of the battery cells, and the cooling fin can promote heat dissipation of the battery cells by transferring the heat of the battery cells to the heat sink.

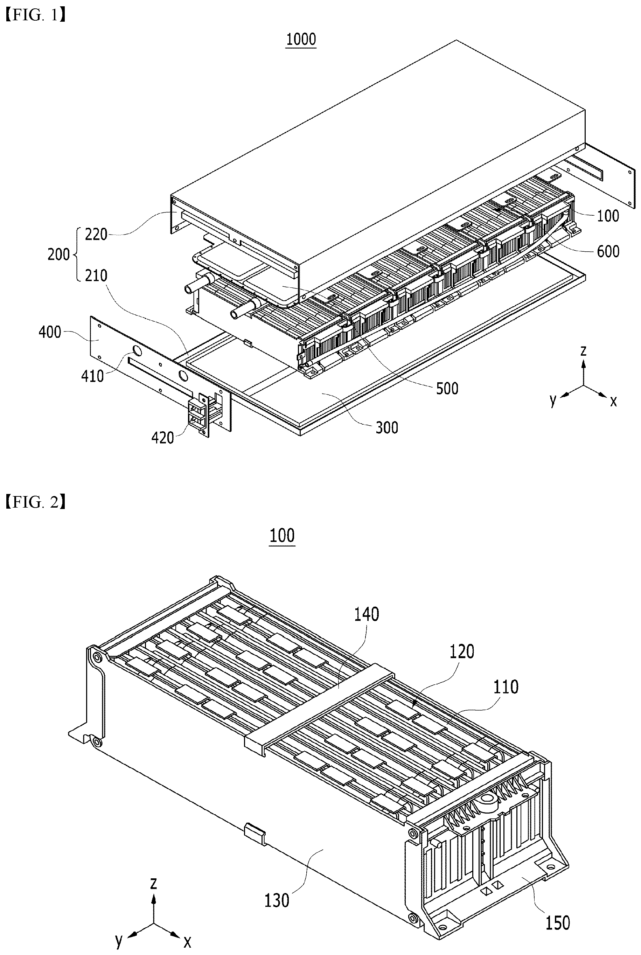

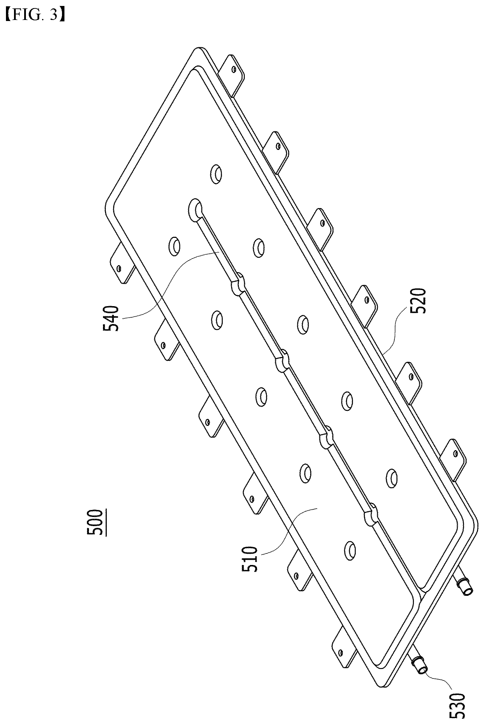

Fig. 1 is an exploded perspective view which shows a battery pack according to an embodiment of the present disclosure. Fig. 2 is a perspective view of a battery module included in the battery pack according to Fig. 1. Fig. 3 is a perspective view of a heat sink included in the battery pack according to Fig. 1.

Referring to Fig. 1, a battery pack 1000 according to an embodiment of the present disclosure has at least one battery module 100, a pack frame 200 for accommodating the battery module 100, a resin layer 300 formed on the inner surface of the pack frame 200, an end plate 400 that closes the opened surface of the pack frame 200, a heat sink 500 disposed between the pack frame 200 and the battery cell stack 120, and a cooling fin 600 for dissipating heat from the battery cells 110 by making contact with the battery cells 110. However, the components contained in the battery pack 1000 are not limited thereto, and depending on the design, the battery pack 1000 may be provided in a state where some of the above-described components are omitted, and may be provided in a state in which other components not mentioned are added.

Referring to Figs. 1 and 2, the battery module 100 provided in the present embodiment may have a module-less structure in which the module frame is omitted.

Conventionally, conventional battery packs have a double assembly structure in which a battery cell stack and partial components connected thereto are assembled to form a battery module, and the plurality of battery modules are accommodated in the battery pack again. At this time, since the battery module includes a module frame that forms the outer surface thereof, conventional battery cells are doubly protected by the module frame of the battery module and the pack frame of the battery pack. However, such a dual assembling structure has a disadvantage that not only the manufacturing cost and manufacturing process of the battery pack are increased, but also when a defect occurs in some battery cells, reassembling property is deteriorated. In addition, when a cooling member, or the like is present outside the battery module, there is a problem that the heat transfer path between the battery cell and the heat sink is somewhat complicated.

Therefore, the battery module 100 of the present embodiment may be provided in the form of a 'cell block' in which the module frame is omitted, and the battery cell stacks 120 contained in the cell block can be directly coupled to the pack frame 200 of the battery pack 1000. Thereby, the structure of the battery pack 1000 can be simplified, advantages in terms of manufacturing cost and manufacturing process can be obtained, and the weight reduction of the battery pack can be achieved.

In the following, the battery module 100 without a module frame may be referred to as a 'cell block' to distinguish it from a battery module having a module frame. However, the battery module 100 is a generic term having the battery cell stack 120 segmented into a predetermined unit for modularization regardless of the presence or absence of the module frame, and the battery module 100 should be construed as including both a typical battery module and a cell block having a module frame.

Referring to Fig. 2, the battery module 100 of the present embodiment may comprise a battery cell stack 120 in which a plurality of battery cells 110 are stacked in one direction, side plates 130 located at both ends in the stacking direction of the battery cell stack 120, a holding strap 140 that wraps around the side plate 130 and the battery cell stack 120 to fix its shape and a busbar frame 150 for covering the front and rear surfaces of the battery cell stack 120.

Meanwhile, Fig. 2 shows the battery module 100 provided in the form of a cell block, but the contents of these figures do not exclude the case of applying the battery module 100 of the sealed structure having the module frame to the battery pack 1000 of the present embodiment.

The battery cell 110 may include an electrode assembly, a cell case, and an electrode lead protruding from the electrode assembly, respectively. The battery cells 110 may be provided in a pouch shape or a prismatic shape in which the number of stacked cells per unit area can be maximized. For example, the battery cell 110 provided in a pouch type can be manufactured by accommodating an electrode assembly including a positive electrode, a negative electrode, and a separator in a cell case made of a laminated sheet and then heat-sealing a sealing part of the cell case. Meanwhile, Figs. 1 and 2 show that the positive electrode lead and the negative electrode lead of the battery cell 110 protrude in opposite directions to each other, but it is not necessarily the case, and the electrode leads of the battery cell 110 can be protruded in the same direction.

The battery cell stack 120 may be one in which a plurality of electrically connected battery cells 110 are stacked in one direction. A direction in which the plurality of battery cells 110 are stacked (hereinafter referred to as a 'stacking direction') may be a y-axis direction (or a -y-axis direction) as shown in Figs. 1 and 2, and in the following, the expression 'axial direction' may be interpreted as including all +/- directions).

Meanwhile, as the battery cell 110 is disposed along one direction, the electrode leads of the battery cell 110 may be located on one surface or one surface and the other surface facing the one surface of the battery cell stack 120. In this manner, the surface on which the electrode leads are located in the battery cell stack 120 may be referred to as the front surface or the rear surface of the battery cell stack 120, and in Figs. 1 and 2, the front surface and the rear surface of the battery cell stack 120 are shown as two surfaces facing each other on the x-axis.

Further, in the battery cell stack 120, the surface on which the outermost battery cell 110 is located may be referred to as a side surface of the battery cell stack 120, and in Figs. 1 and 2, the side surface of the battery cell stack 120 is shown as two surfaces facing each other on the y-axis.

The side plate 130 may be provided to maintain the overall shape of the battery cell stack 120. The side plate 130 is a plate-shaped member, and can supplement the stiffness of the cell block instead of the module frame. The side plate 130 may be disposed at both ends in the stacking direction of the battery cell stack 120, and may make contact with the outermost battery cells 110 on both sides of the battery cell stack 120.

The side plate 130 may be manufactured from various materials, and may be provided by various manufacturing methods. In one example, the side plate 130 may be made of a plastic material manufactured by injection molding. In another example, the side plate 130 may be made of a leaf spring material. In another example, the side plate 130 may be made of a material having elasticity so that its shape may be partially deformed in response to a volume change of the battery cell stack 120 due to swelling.

The holding strap 140 can be for fixing the position and shape of the side plates 130 at both ends of the battery cell stack 120. The holding strap 140 may be a member having a length and a width. Specifically, the battery cell stack 120 may be located between the two side plates 130 in contact with the outermost battery cell 110, and the holding strap 140 may cross the battery cell stack 120 to connect the two side plates 130. Thereby, the holding strap 140 can prevent the distance between the two side plates 130 from increasing beyond a certain range, whereby the overall shape of the cell block can be maintained within a certain range.

The holding strap 140 may have hooks at both terminal ends in the longitudinal direction for stable coupling with the side plate 130. The hook may be formed by bending both terminal ends of the holding strap 140 in the longitudinal direction. Meanwhile, the side plate 130 may have a hook groove formed at a position corresponding to the hook, and the holding strap 140 and the side plate 130 can be stably coupled through the coupling of the hook and the hook groove.

The holding strap 140 may be provided with various materials or through various manufacturing methods. In one example, the holding strap 140 may be made from a material having elasticity, through which the volume change of the battery cell stack 120 due to swelling can be allowed within a certain range.

Meanwhile, the holding strap 140 is for fixing the relative position between the side plate 130 and the battery cell stack 120, and if its purpose as the 'fixing member' is achieved, it may be provided in a shape other than those shown. For example, the fixing member may be provided in the form of a long bolt that can cross between the two side plates 130, that is, in the form of a long bolt. The side plate 130 may be provided with a groove into which the long bolt can be inserted, and the long bolt may be simultaneously coupled with the two side plates 130 through the groove to thereby fix the relative positions of the two side plates 130. The long bolt may be provided at an edge of the side plate 130, preferably at a position close to the vertex of the side plate 130. Depending on the design, it is possible to replace the holding strap 140 with the above-mentioned long bolt, but both the holding strap 140 and the long bolt can also be provided in the cell block.

The busbar frame 150 can be for covering one surface of the battery cell stack 120, and at the same time, guiding the connection between the battery cell stack 120 and an external device by being located on one surface of the battery cell stack 120. The busbar frame 150 may be located on the front surface or rear surface of the battery cell stack 120. Two busbar frames 150 may be provided so as to be located on the front surface and the rear surface of the battery cell stack 120. A busbar may be mounted on the busbar frame 150, through which the electrode lead of the battery cell stack 120 is connected to the busbar, so that the battery cell stack 120 may be electrically connected to an external device.

The busbar frame 150 may include an electrically insulating material. The busbar frame 150 can restrict contact of the busbar with other portions of the battery cells 110 other than the portion joined to the electrode lead, and can prevent an electrical short circuit from occurring.

The pack frame 200 can be for protecting the battery module 100 and the electrical equipment connected thereto from external physical impact. The pack frame 200 can accommodate the battery module 100 and electrical equipment connected thereto in the inner space of the pack frame 200. Here, the pack frame 200 includes an inner surface and an outer surface, and the inner space of the pack frame 200 may be defined by the inner surface.

The battery modules 100 accommodated in the pack frame 200 can be formed in plural numbers. The plurality of battery modules 100 may be referred to as a 'module assembly'. The module assemblies can be arranged in rows and columns within the pack frame 200. Here, the 'row' may mean a set of battery modules 100 arranged in one direction, and the 'column' may mean a set of battery modules 100 arranged in a direction perpendicular to the one direction. For example, the battery modules 100 can be arranged along the stacking direction of the battery cell stack as shown in Fig. 1 to form one row or column, thereby forming a module assembly.

The pack frame 200 may be provided in an open hollow shape along one direction. For example, as shown in Fig. 1, a plurality of battery modules 100 are consecutively located along the stacking direction of the battery cells 110, and the pack frame 200 may have a hollow shape opened along the above-mentioned stacking direction.

The pack frame 200 may have various structures. In one example, as shown in Fig. 1, the pack frame 200 may include a lower frame 210 and an upper frame 220. Here, the lower frame 210 may be provided in a plate shape, and the upper frame 220 may be provided in a U-shape. At least one battery module 100 may be arranged in the plate-shaped lower frame 210, and a U-shaped upper frame 220 may be provided so as to wrap the upper surface of the module assembly and two surfaces on the x-axis.

The pack frame 200 may include a portion having high thermal conductivity in order to rapidly dissipate heat generated in the inner space to the outside. For example, at least a part of the pack frame 200 may be made from a metal having high thermal conductivity, and examples thereof may be aluminum, gold, silver, copper, platinum, or an alloy containing these, and the like. In addition, the pack frame 200 may have a partially electrical insulating property, and an insulating film may be provided at a position where insulation is required, or an insulating coating can be applied. A portion to which an insulating film or insulating coating is applied in the pack frame 200 may be referred to as an insulating part.

A resin layer 300 may be provided between the battery module 100 and the inner surface of the pack frame 200. The resin layer 300 may be provided between the bottom surface of the battery module 100 and the lower frame 210. The resin layer 300 can be provided between the upper surface of the battery module 100 and the upper frame 220. Here, specifically, the resin layer 300 may be provided between the heat sink 500 and the upper frame 220 , which will be described later.

The resin layer 300 may be formed by injecting a resin between one of the inner surfaces of the battery cell stack 120 and the pack frame 200. However, it is not necessarily the case, and the resin layer 300 may be a member provided in a plate shape.

The resin layer 300 can be made from various materials, and the function of the resin layer 300 can vary depending on the material. For example, the resin layer 300 may be formed from an insulating material, and electron transfer between the battery module 100 and the pack frame 200 can be prevented through the insulating resin layer 300. In another example, the resin layer 300 may be formed of a thermally conductive material. The resin layer 300 made of a thermally conductive material transfers heat generated in the battery cell 110 to the pack frame 200, so that heat can be released/transferred to the outside. In another example, the resin layer 300 may include an adhesive material, through which the battery module 100 and the pack frame 200 can be fixed to each other. In a specific example, the resin layer 300 may be provided so as to include at least one of a silicone-based material, a urethane-based material, and an acrylic-based material.

The end plate 400 can be for protecting the battery module 100 and the electrical components connected thereto from external physical impact by sealing the open surface of the pack frame 200. Each edge of the end plate 400 can be coupled to a corresponding edge of the pack frame 200 by a method such as welding. The end plates 400 can be provided in two numbers so as to seal two open surfaces of the pack frame 200, and may be made of a metal material having a predetermined strength.

An opening 410 may be formed in the end plate 400 to expose the inlet/outlet port 530 of the heat sink 500, which will be described later, and a connector 420 for low voltage (LV) connection or high voltage (HV) connection with an external device can be mounted.

The heat sink 500 may be for cooling the inside of the battery pack 1000 by dissipating heat generated from the battery cells 110. Considering that high-temperature air or gas emitted when the battery cell 110 ignites mainly moves in the opposite direction to gravity, the heat sink 500 may be preferably located at the upper part of the battery cells 110 as shown in Fig. 1. However, it is not necessarily the case, and the heat sink 500 can be located at the lower part of the battery cells 110 according to various design reasons.

The heat sink 500 may be a water-cooled type heat sink 500 into which a refrigerant, for example, cooling water is injected. At this time, any cooling water can be used for the heat sink 500 as long as it can dissipate the heat of the battery cells 110 by moving along the flow path inside the heat sink 500.

Referring to Fig. 3, the heat sink 500 may include an upper plate 510, a lower plate 520 and an inlet/outlet port 530. The heat sink 500 may be formed by coupling the upper plate 510 and the lower plate 520. An empty space may be formed between the coupled upper plate 510 and the lower plate 520, and cooling water can be injected into the empty space through the inlet/outlet port 530. The cooling water can be supplied through the inlet port 530 and discharged to the outlet port 530.

A groove 540 may be formed in the heat sink 500, through which the flow of cooling water can be determined. Fig. 3 is one example thereof, showing that the flow of cooling water is formed in a U-shape by the grooves 540 formed along the longitudinal direction of the heat sink 500.

Meanwhile, the above description is given on the assumption that the heat sink 500 is provided outside the battery module 100, but it is not necessarily the case, and the heat sink 500 can also be disposed inside the battery module 100. When the heat sink 500 is disposed inside the battery module 100, even if the battery module 100 has a closed structure having a module frame, heat transfer between the heat sink 500 and the battery cells 110 can be easily achieved.

As the heat sink 500 is provided to the battery pack 1000 or the battery module 100 in this way, the heat generated in the battery cell 110 can be absorbed by the heat sink 500 and discharged. However, since it is nearly impossible that the heat sink 500 and the battery cells 110, which are coupled through assembly after they are manufactured, are designed so as to make complete contact with each other in the battery pack 1000 or the battery module 100, a separation space may typically be generated between the heat sink 500 and the battery cells 110. An air gap or an air pocket may be formed in the separation space generated between the heat sink 500 and the battery cell 110 in this way, heat transfer from the battery cell 110 to the heat sink 500 may not be smooth, and the cooling efficiency of the heat sink 500 may be slightly reduced.

In order to overcome the deterioration in cooling efficiency due to air pockets and the like, a method of forming a heat transfer passage by filling the above-mentioned separation space with a thermal interface material (TIM) has been devised. However, there is a problem that the overall manufacturing cost of the battery pack 1000 increases due to the unit cost of the heat dissipation interface material, and the manufacturing time of the battery pack 1000 increases due to the addition of process. Therefore, the battery module 100 or the battery pack 1000 of the present embodiment may be provided with a cooling fin 600 for minimizing the deterioration in cooling efficiency due to the air gap.

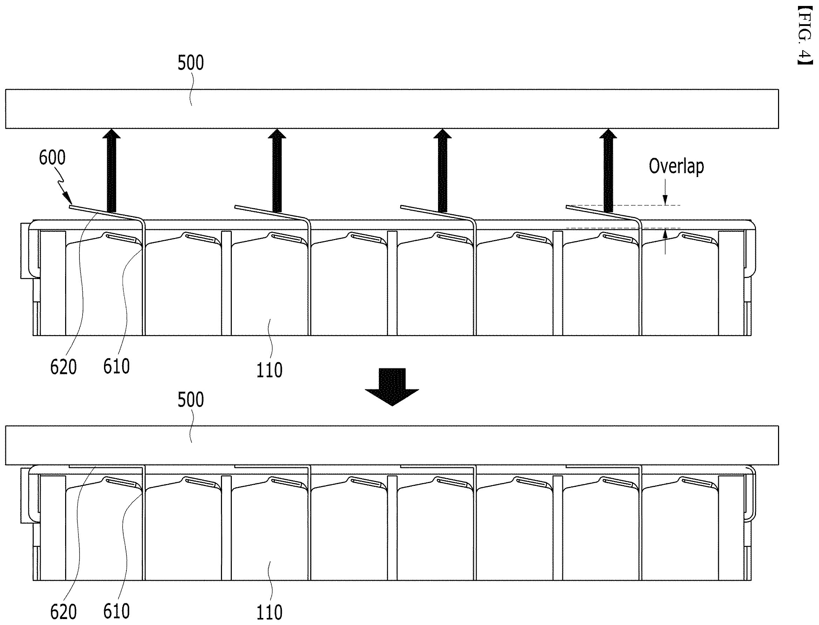

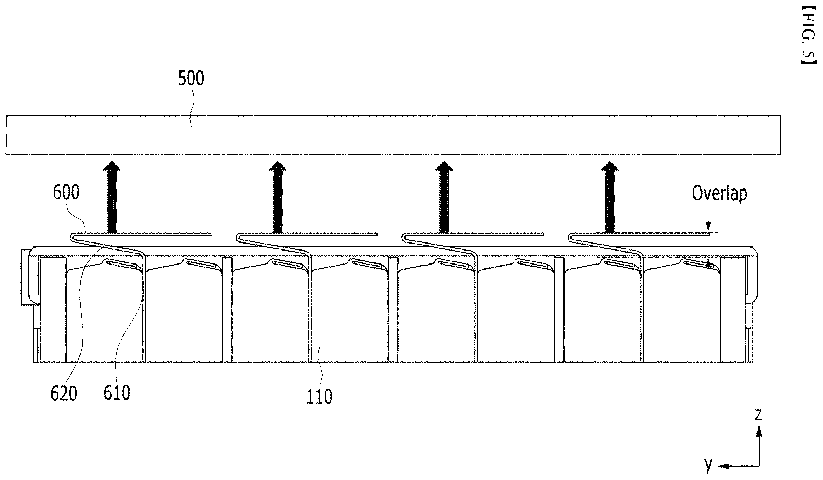

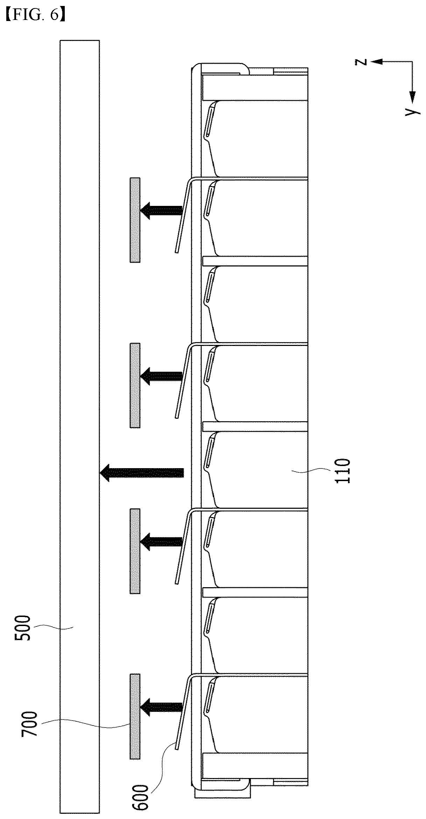

Fig. 4 is a cross-sectional view of the battery pack of Fig. 1 cut along the yz plane. Fig. 5 is a cross-sectional view which shows a modification of the battery pack of Fig. 4. Fig. 6 is a diagram which shows a case where a heat dissipation layer is provided in the battery pack of Fig. 4. Here, Figs. 4 to 6 may show cross sections in a state where the battery pack is disassembled. The arrows in Figs. 4 to 6 may indicate a coupling direction of each component within the battery pack.

Referring to Figs. 4 to 6, the cooling fins 600 of the present embodiment may be for maintaining the temperature inside the battery pack 1000 or the battery module 100 within an appropriate range.

The cooling fin 600 may be provided between the battery cells 110 facing one surface thereof, and the cooling fins 600 can make contact with one surface of the battery cells 110 to thereby absorb heat generated from the battery cells 110. The cooling fins 600 may transfer heat absorbed from the battery cells 110 toward the heat sink 500. A part of the cooling fin 600 may exist in a separation space between the battery cell 110 and the heat sink 500, whereby the heat of the battery cell 110 may be transferred to the heat sink 500 via the cooling fin 600. As the cooling fin 600 exists in the separation space between the battery cell 110 and the heat sink 500, the amount of heat dissipation interface material used in the battery module 100 or the battery pack 1000 can be minimized, and a reduction in manufacturing cost or simplification of the manufacturing process of the battery module 100 or the battery pack 1000 can be achieved.

The cooling fin 600 may include a body part 610 in surface contact with one surface of the battery cell 110, and an extension part 620 extending beyond the upper surface of the battery cell stack 120 and located adjacent to the heat sink 500. The body part 610 receives transfer of heat from the battery cell 110 by making contact with the battery cell 110, and the extension part 620 can dissipate heat transferred toward the heat sink 500 by being located adjacent to the heat sink 500. Here, the extension part 620 of the cooling fin 600 may be located adjacent to the lower plate 520 of the heat sink 500 or located so as to make contact with the lower plate 520.

A plurality of cooling fins 600 may be provided in the battery cell stack 120. The cooling fins 600 may be provided between two adjacent battery cells 110, but it is not necessarily the case, and it may be provided only in some of the two adjacent battery cells 110. At this time, when the cooling fin 600 is provided only in some of the two adjacent battery cells 110, the cooling fins 600 may be preferably disposed at regular intervals so that the effect of the cooling fins 600 appears evenly on the battery cell stack 120.

The cooling fin 600 may be made from a material having high thermal conductivity. For example, the cooling fin 600 may be made from aluminum, gold, silver, copper, platinum, an alloy containing them, or the like. The cooling fin 600 made of a material with high thermal conductivity may have a very low thermal resistance than air, and heat may be more smoothly moved between the battery cell 110 and the heat sink 500 by the cooling fins 600.

Referring to Figs. 4 and 5, the cooling fin 600 of the present embodiment may have an elastic structure. Specifically, the extension part 620 of the cooling fin 600 may be provided in the form of a spring having a bend. The extension part 620 may have a bent part formed by bending in a direction different from the upper side (z-axis) of the battery cell stack 120.

For example, the extension part 620 of the cooling fin 600 is extended to the outside of the battery cell stack 120 along the z-axis direction, as shown in Fig. 4, but may be folded or bent so that the extension direction has an x-axis or a y-axis component. As a part of the cooling fin 600 is bent, the absolute length of the cooling fin 600 existing in the separation space between the battery cell 110 and the heat sink 500 may be longer. Thus, as the bent part is formed in the cooling fin 600, the cooling fins 600 further traverse the space within the air gap, so that a decrease in cooling performance due to an air gap between the battery cell 110 and the heat sink 500 can be minimized. Here, the 'absolute length' of the cooling fin 600 may mean a length before the bend is formed, or a length when the cooling fin 600 with the bend is formed in a straight shape. Meanwhile, the shape of the bent part of the cooling fin 600 provided as shown in Fig. 4 may be referred to as an L-shaped spring shape.

In another example, the extension part 620 of the cooling fin 600 may be folded or bent twice or more so as to have an x-axis or y-axis component, as shown in Fig. 5. By increasing the number of bends or the bent length section of the bent part formed in the cooling fin 600, the absolute length of the cooling fins 600 existing in the separation space between the battery cell 110 and the heat sink 500 may be longer in Fig. 5 than in Fig. 4. Comparing with the cooling fin 600 of Fig. 4, the cooling fin 600 of Fig. 5 may exist more in the air gap space between the battery cell 110 and the heat sink 500. Therefore, as the number of bends or the bent length section of the cooling fin 600 increases, the effect of the cooling fin 600 can be further maximized. Meanwhile, as shown in Fig. 5, the shape of the bent part of the cooling fin 600 formed by bending twice or more may be referred to as an S-shaped spring shape.

The cooling fin 600 may be an elastic body whose shape is deformed by an external force. In order to excellently exhibit the heat dissipation effect by the cooling fins 600, it may be desirable that the upper end of the cooling fin 600 in the longitudinal direction makes contact with the heat sink 500. However, since it is impossible to predict the size of the separation space formed between the battery cell 110 and the heat sink 500 in the battery pack 1000 or the battery module 100, it may be very difficult to design an appropriate size of the cooling fins 600. When the cooling fin 600 is provided as an elastic body, even if the extension part 620 of the cooling fin 600 is designed to be larger than the actual air gap size, it is appropriately deformed during the assembly process, so that the extension part 620 of the cooling fin 600 can be matched with the air gap size between the battery cell 110 and the heat sink 500, and thus, the design of the cooling fin 600 can be made simpler. That is, when the cooling fin 600 is provided as an elastic body, the length of extension part 620 in a state where no external force is applied may be longer than the distance between battery cell stack 120 and heat sink 500. Here, the length of the extension part 620 may be a length on the z-axis occupied by the extension part 620 in the cooling fin 600. At this time, the distance between the battery cell stack 120 and the heat sink 500 may mean a distance on the z-axis.

Here, the reason that the cooling fin 600 is an elastic body may be that the cooling fin 600 is made of a material having elasticity, such as a 10xx series aluminum alloy, but it is not necessarily the case. In other words, even if the cooling fin 600 is not provided with an elastic material or is made from a material having a slightly elasticity, the cooling fin 600 can exhibit all the effects of the cooling fin 600 provided as an elastic body, as long as it has an elastic structure as shown in Figs. 4 and 5.

Specifically, when the cooling fins 600 are provided in a shape as shown in Figs. 4 and 5, the portion shown as 'overlap' in the cooling fins 600 is compressed by an external force, so that the extension part 620 of the cooling fin 600 can be matched with the air gap size between the battery cell 110 and the heat sink 500. At this time, since a larger portion of the cooling fins 600 may make contact with the heat sink 500 by compression, the heat dissipation effect by the cooling fins 600 can be further improved.

Meanwhile, as the cooling fins 600 are provided, the heat dissipation interface material may not be used in the battery pack 1000 at all, and in order to further improve the cooling performance of the battery pack 1000, a heat dissipation interface material may be further applied to the battery pack 1000 provided with the cooling fins 600.

Referring to Fig. 6, a heat dissipation layer 700 may be provided in at least a part of a separation space between the battery cell 110 and the heat sink 500.

The heat dissipation layer 700 provides a heat transfer path within the separation space between the battery cell 110 and the heat sink 500, so that the cooling performance of the battery pack 1000 can be improved. The heat dissipation layer 700 may be formed of a heat transfer material having a lower heat resistance than air, that is, a heat dissipation interface material. Since the heat dissipation layer 700 is formed of a material with high thermal conductivity, it may contribute to preventing a decrease in cooling performance due to an air gap between the battery cell 110 and the heat sink 500.

At this time, since the battery pack 1000 of the present embodiment includes the cooling fins 600 described above, even if the heat dissipation layer 700 is formed, the size (volume) of the heat dissipation layer 700 can be significantly reduced as compared to the case where the cooling fins 600 are not used. Therefore, even if the battery pack 1000 of Fig. 6 includes the heat dissipation layer 700, the amount of the heat dissipation interface material used can be minimized as long as it includes the cooling fins 600, thereby greatly reducing the manufacturing cost.

For example, the heat dissipation layer 700 may be formed only in the periphery of the cooling fin 600, specifically, the extension part 620. In addition, the heat dissipation layer 700 may be formed only in the periphery of one terminal end of the extension part 620. In other words, when defining a first point where the body part 610 and the extension part 620 abut on the cooling fin 600 and a second point that is the end of the extension part 620, the heat dissipation layer 700 may be located adjacent to the second point than to the first point. Here, the terminal end of the extension part 620 may correspond to the terminal end of the cooling fin 600.

Here, as shown in Fig. 6, the heat dissipation layer 700 may be discontinuously formed at positions corresponding to the cooling fins 600. Specifically, the plurality of cooling fins 600 may be disposed at intervals, wherein the heat dissipation layer 700 may be formed in plural numbers so as to correspond to the plurality of cooling fins 600, respectively. That is, the heat dissipation layer 700 may exist discontinuously in the stacking direction of the battery cell stack 120, whereby the use of a heat dissipation interface material for improving the performance of the cooling fin 600 can be minimized.

The heat dissipation layer 700 may improve the heat dissipation performance of the cooling fins 600. Even if the cooling fin 600 is provided as an elastic body as described above, in order to deform the shape of the cooling fin 600, a relatively large external force must be applied. Accordingly, the actual level of deformation of the cooling fins 600 may not be large. Moreover, even if the cooling fins 600 are deformed, the heat conduction area between the cooling fins 600 and the heat sink 500 may not be sufficiently large. However, when the heat dissipation layer 700 is added to the terminal end of the cooling fin 600 as in the present embodiment, the heat conduction passage of the cooling fin 600 and the heat sink 500 may be formed large by the heat dissipation layer 700, so that the heat dissipation performance of the cooling fins 600 can be further improved.

The heat dissipation layer 700 may make contact with the cooling fins 600. The heat dissipation layer 700 is formed around the extension part 620 of the cooling fin 600, so that the heat capacity of the cooling fin 600 can be improved. The heat dissipation layer 700 is located between the cooling fins 600 and the heat sink 500, and both the cooling fins 600 and the heat sink 500 may make contact with each other. At this time, since the heat dissipation layer 700 can contribute to heat transfer between the cooling fins 600 and the heat sink 500, the heat transfer between the cooling fins 600 and the heat sink 500 can be promoted by the heat dissipation layer 700.

Here, the cooling fin 600 may simply contact the heat dissipation layer 700, but the cooling fins 600 may be formed so as to pass through the heat dissipation layer 700, or a part of the cooling fins 600 may be formed to be impregnated in the heat dissipation layer 700. Similar to the case where the cooling fin 600 passes through the heat dissipation layer 700 or is impregnated therein, heat transfer between the two members can be more easily performed as the contact area between the cooling fins 600 and the heat dissipation layer 700 increases.

The heat dissipation layer 700 may compensate for the designing or assembling errors of the cooling fins 600. Specifically, the cooling fins 600 may not make contact with the heat sink 500 due to designing or assembling errors, but when the heat dissipation layer 700 is located at the periphery of the cooling fin 600, heat conduction is possible between the cooling fin 600 and the heat sink 500 via the heat dissipation layer 700, so that such designing error can be overcome. In addition, the heat dissipation layer 700 may be slightly compressed by the elastic force of the cooling fins 600 during the assembling process of the battery module 100. Thus, even when the cooling fins 600 and the heat sink 500 are manufactured/designed so as to make contact with each other or to be slightly spaced apart, the heat transfer path of the cooling fin 600 can be more stably formed by the heat dissipation layer 700. Therefore, as the heat dissipation layer 700 is provided in the battery pack 1000, the design of the heat sink 500 or the cooling fins 600 can be made more flexible.

The heat dissipation layer 700 may be formed by curing a material in a liquid state. In a specific example, the heat dissipation layer 700 can be formed by arranging the battery modules 100 inside the pack frame 200, applying a liquid resin, and then curing the applied resin.

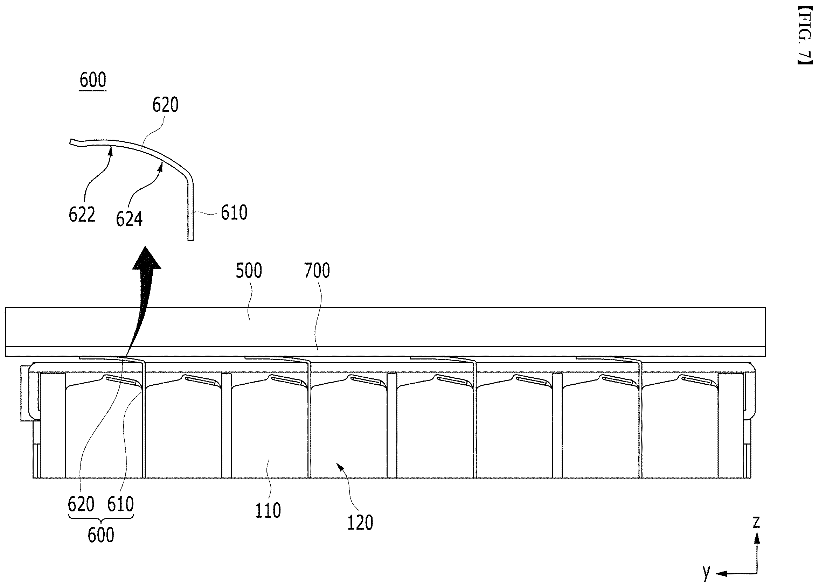

Fig. 7 is another example of the present disclosure, which shows a battery module or battery pack equipped with a cooling fin according to a modification of Fig. 4.

Referring to Fig. 7, the cooling fins 600 of the present embodiment are provided between the battery cells 110 facing one surface thereof, thereby facilitating heat dissipation of the battery cells 110. The cooling fins 600 can make contact with one surface of the battery cells 110 to thereby absorb heat generated from the battery cells 110. The cooling fins 600 can be connected to the heat sink 500 located above the battery cell 110, so that heat absorbed from the battery cell 110 can be transferred to the heat sink 500. Here, the cooling fins 600 may make contact with the heat sink 500, or may be connected, coupled, or attached through a heat dissipation layer 700 described later.

The cooling fin 600 may include a body part 610 disposed in parallel with one surface of the battery cell 110, and an extension part 620 extending from one end of the body part 610. The body part 610 receives transfer of heat from the battery cell 110 by being located adjacent to the battery cell 110, and the extension part 620 can dissipate the received heat by being located adjacent to the heat sink 500 toward the heat sink 500.

The body part 610 may make surface contact with one surface of the battery cell 110. Depending on the design, a heat conductive material may be located between the body part 610 and one surface of the battery cell 110, and the body part 610 and the battery cell 110 may be in close contact with each other through a heat conductive material.

The extension part 620 may be extended from one end of the body part 610 toward the upper side (+z-axis direction) of the battery cell stack 120 and located adjacent to the heat sink 500. Here, the extension part 620 of the cooling fin 600 may be located adjacent to the lower plate located on the lower surface of the heat sink 500, or may be located to make contact with the lower plate.

The extension part 620 may be formed so as to have a long width at one corner of the body part 610, or may be formed so as to have a short width. When the width of the extension 620 is short, a plurality of cooling fins 600 may be formed.

Also in the present embodiment, a plurality of cooling fins 600 may be provided in the battery cell stack 120 in which a plurality of battery cells 110 are stacked in one direction. The cooling fins 600 may be provided between the two adjacent battery cells 110, but it is not necessarily the case, and may be provided only in some of the two adjacent battery cells 110. At this time, when the cooling fin 600 is provided only in some of the two adjacent battery cells 110, the cooling fins 600 may be preferably disposed at regular intervals so that the effect of the cooling fins 600 exhibits evenly on the battery cell stack 120.

Further, in the present embodiment, the cooling fins 600 may be made from a material having high thermal conductivity. For example, the cooling fin 600 may be made from aluminum, gold, silver, copper, platinum, an alloy containing them, or the like. The cooling fin 600 made of a material with high thermal conductivity may have a very low thermal resistance than air, and this cooling fin 600 allows heat to be transferred more smoothly between the battery cell 110 and the heat sink 500.

Further, in the present embodiment, the cooling fin 600 may be an elastic body whose shape is deformed by an external force. In order to excellently exhibit the heat dissipation effect by the cooling fins 600, it may be preferable that the end of the cooling fin 600 (the end on the z-axis, that is, the end in the longitudinal direction) makes contact with the heat sink 500. However, it is impossible to predict the size of the space formed between the battery cell 110 and the heat sink 500 in the battery pack 1000 or the battery module 100. Thus, it may be very difficult to design an appropriate size of the cooling fins 600. In the case where the cooling fin 600 is provided as an elastic material, even if the extension part 620 of the cooling fin 600 is designed to be larger than the size of the actual air gap, the extension part 620 of the cooling fin 600 can be appropriately deformed during the assembling process to thereby match with the size of the air gap between the battery cell 110 and the heat sink 500, and therefore, the design of the cooling fin 600 can be made simpler. That is, when the cooling fin 600 is provided as an elastic body, the length of the extension part 620 in a state where no external force is applied may be longer than the distance between battery cell stack 120 and heat sink 500. Here, the length of the extension part 620 may be a length on the z-axis occupied by the extension part 620 in the cooling fin 600. At this time, the distance between the battery cell stack 120 and the heat sink 500 may mean a distance on the z-axis.

Here, the reason that the cooling fin 600 is an elastic body may be that the cooling fin 600 is made of a material having elasticity, such as a 10xx series aluminum alloy, but it is not necessarily the case. In other words, even if the cooling fin 600 is not provided with an elastic material or is made of a material with slightly low elasticity, in the case of being formed in a deformable shape, the cooling fin 600 can exhibit all the effects of the cooling fin 600 provided as an elastic body.

Referring back to Fig. 7, the cooling fins 600 of the present embodiment may be provided in a round shape. The extension part 620 of the cooling fin 600 may have a round shape curved in the thickness direction. The extension part 620 may be formed by bending in a direction different from the upper side (z-axis) of the battery cell stack 120. The extension part 620 can be extended to the outside of the battery cell stack 120 along the z-axis direction, and curved or bent so that the extension direction has a y-axis component.

The extension part 620 may have a curvature. The curvature that the extension part 620 has may be different depending on the position. The extension part 620 may include a first point 622 having a first curvature and a second point 624 having a second curvature. Here, the first curvature and the second curvature may be different from each other.

The extension part 620 may be formed so that its cross section has a slope. Here, the cross section of the extension part 620 may mean a cross section (yz plane) in a direction perpendicular to the lower surface or the ground surface of the battery cell stack 120. A cross section of the extension part 620 may be a plane parallel to the stacking direction of the battery cells 110 or the thickness direction of the extension part 620. Further, the slope herein may be calculated based on a direction parallel to the lower surface or the ground surface of the battery cell stack 120. In the cross section of the extension part 620, the slope may be calculated based on the stacking direction of the battery cells 110 or the thickness direction (y-axis) of the extension part 620.

The slope of the extension part 620 may not be constant. The extension part 620 may be formed such that the absolute value of the slope gradually decreases within a predetermined section.

For example, the extension part 620 may have a slope with a larger absolute value closer to one end of the extension part 620 abutting on one end of the body part 610 and a slope with a smaller absolute value closer to the other end. However, as shown in the enlarged view in Fig. 7, when the terminal end of the other end of the extension part 620 is lifted, it may not be so.

In another example, the extension part 620 may have a slope value with a larger absolute value as it moves away from one end of the body part 610 from the point abutting on one end of the body part 610 to a point located closest to the heat sink 500. The extension part 620 may have a slope value with a smaller absolute value as it approaches the heat sink 500 until it makes contact with the heat sink 500 in an extension direction extending from one end of the body part 610. At this time, one point of the extension part 620 located closest to the heat sink 500 may have a slope value of zero or close thereto.

The extension part 620 may include a first point 622 having a first slope and a second point 624 having a second slope. The first slope and the second slope may be different from each other. The absolute value of the first slope may be smaller than the absolute value of the second slope.

Here, the first point 622 may be located farther from the body part 610 than the second point 624. The first point 622 may be located closer to the heat sink 500 than the second point 624. The second point 624 may not make contact with the heat sink 500. The second point 624 may be in non-contact with the heat sink 500. The first point 622 may make contact with the heat sink 500, but it is not necessarily the case.

Also, the first point 622 herein may be a point located closest to the heat sink 500, and the second point 624 may be a point located between the first point 622 and one end of the body part 610.

As will be described later, when the heat dissipation layer 700 is formed under the heat sink 500, the first point 622 may make contact with the heat dissipation layer 700. The second point 624 may also make contact with the heat dissipation layer 700, but it is not necessarily the case, and may or may not contact depending on the design.

Referring back to Fig. 7, a heat dissipation layer 700 can be formed in the separation space between the battery cell 110 and the heat sink 500 to form a stable thermal contact between the cooling fins 600 and the heat sink 500 and to make a thermal contact surface larger.

The heat dissipation layer 700 can provide a heat transfer path within the separation space between the battery cell 110 and the heat sink 500, thereby improving the cooling performance of the heat sink 500. The heat dissipation layer 700 may be formed of a heat transfer material having a lower thermal resistance than air, that is, a thermal interface material (TIM). Since the heat dissipation layer 700 is formed of a material with high thermal conductivity, it can contribute to preventing a decrease in cooling performance due to an air gap between the battery cell 110 and the heat sink 500.

The heat dissipation layer 700 may be formed on the lower surface of the heat sink 500. The heat dissipation layer 700 may make contact with the lower plate of the heat sink 500.

The heat dissipation layer 700 may make contact with the cooling fins 600. The heat dissipation layer 700 is formed in the periphery of the extension part 620 of the cooling fin 600, thereby improving the heat capacity of the cooling fin 600. The heat dissipation layer 700 is located between the cooling fins 600 and the heat sink 500, and may make contact with both the cooling fins 600 and the heat sink 500. At this time, since the heat dissipation layer 700 may contribute to heat transfer between the cooling fins 600 and the heat sink 500, heat transfer between the cooling fins 600 and the heat sink 500 can be promoted by the heat dissipation layer 700.

Here, the cooling fins 600 may simply contact the heat dissipation layer 700, but the cooling fins 600 may be formed so as to pass through the heat dissipation layer 700, or a part of the cooling fins 600 may be formed to be impregnated in the heat dissipation layer 700. Similar to the case where the cooling fin 600 passes through the heat dissipation layer 700 or is impregnated therein, heat transfer between the two members can be more easily performed as the contact area between the cooling fins 600 and the heat dissipation layer 700 increases.

The heat dissipation layer 700 can improve the heat dissipation performance of the cooling fins 600. Even if the cooling fin 600 is provided as an elastic body as described above, in order to deform the shape of the cooling fin 600, a relatively large external force must be applied. Accordingly, the actual level of deformation of the cooling fins 600 may not be large. Moreover, even if the cooling fins 600 are deformed, the heat conduction area between the cooling fins 600 and the heat sink 500 may not be sufficiently large. However, when the heat dissipation layer 700 is added to the lower surface of the cooling fin 600 as shown in the figure, the heat conduction passage of the cooling fin 600 and the heat sink 500 may be formed largely by the heat dissipation layer 700, so that the heat dissipation performance of the cooling fins 600 can be further improved.

The heat dissipation layer 700 may compensate for the designing or assembling errors of the cooling fins 600. Specifically, the cooling fins 600 may not make contact with the heat sink 500 due to designing or assembling errors, but when the heat dissipation layer 700 is located at the periphery of the cooling fin 600, heat conduction is possible between the cooling fin 600 and the heat sink 500 via the heat dissipation layer 700, so that this design error can be overcome. In addition, the heat dissipation layer 700 may be slightly compressed by the elastic force of the cooling fins 600 during the assembling process of the battery module 100. Thus, even when the cooling fins 600 and the heat sink 500 are manufactured/designed so as make contact with each other or to be slightly spaced apart, the heat transfer path of the cooling fin 600 can be more stably formed by the heat dissipation layer 700. Therefore, as the heat dissipation layer 700 is provided in the battery pack 1000, the design of the heat sink 500 or the cooling fins 600 can be made more flexible.

The heat dissipation layer 700 may be formed with a large width such that it has half or more of the width (x-axis direction) of the battery cell 110. Alternatively, the heat dissipation layer 700 may be formed to have a width smaller than half of the width (x-axis direction) of the battery cell 110. When the extension parts 620 are formed in plural numbers on one cooling fin 600, the heat dissipation layer 700 may be formed with a large width so as to correspond to all the extension parts 620, but the heat dissipation layers 700 having a small width may be formed in plural numbers so as to correspond to each extension part 620. By forming a plurality of heat dissipation layers 700 with a small width, it is possible to minimize the amount of heat dissipation interface material used in the battery module or battery pack, and achieve cost reduction.

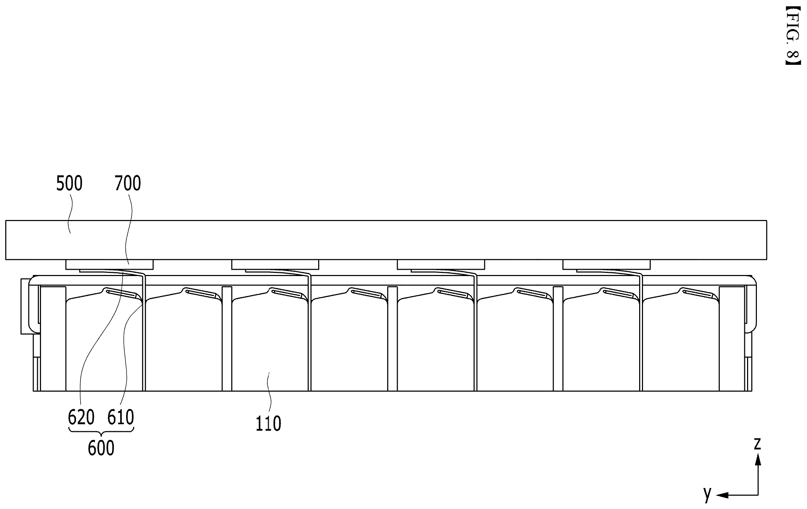

The heat dissipation layer 700 may be formed in a long shape extending in the stacking direction of the battery cells 110. However, it is not necessarily the case, and the heat dissipation layer 700 may be disposed at intervals from each other in the stacking direction of the battery cells 110. A description thereof will be given later with reference to Fig. 8.

The heat dissipation layer 700 may be formed by curing a material in a liquid state. In a specific example, the battery cell stack 120 is disposed inside the frame of the battery module or battery pack, then a liquid resin is applied, and the applied resin can be cured to form the heat dissipation layer 700.

Fig. 8 shows another example of a battery module or battery pack equipped with a cooling fin according to another embodiment of the present disclosure.

Referring to Fig. 8, the heat dissipation layer 700 may be discontinuously formed at a position corresponding to the cooling fin 600. The heat dissipation layer 700 may be formed only in the periphery of the cooling fin 600, specifically, the extension part 620. In addition, the heat dissipation layer 700 may be formed only in the periphery of one terminal end of the extension part 620. Specifically, the plurality of cooling fins 600 may be disposed at intervals, wherein the heat dissipation layer 700 may be formed in plural numbers so as to correspond to a plurality of cooling fins 600, respectively. The heat dissipation layer 700 may exist discontinuously in the stacking direction of the battery cell stack 120. Considering that the unit cost of the heat dissipation interface material used for the heat dissipation layer 700 is high, it may be desirable to minimize the use of heat dissipation interface material by forming the heat dissipation layer 700 discontinuously.

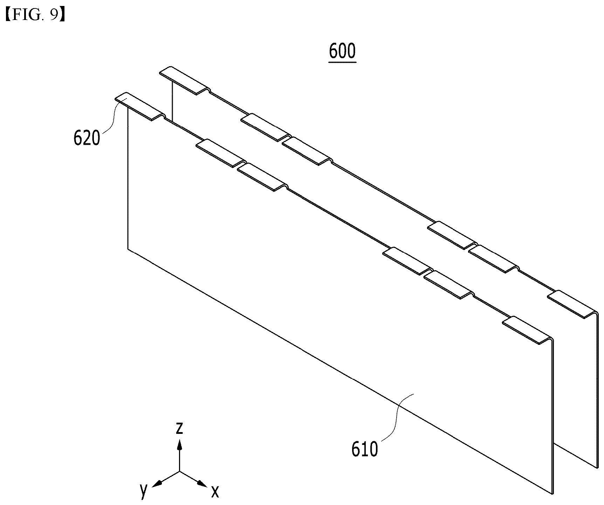

Fig. 9 is a perspective view of a cooling fin according to embodiments of Figs. 7 and 8 of the present disclosure.

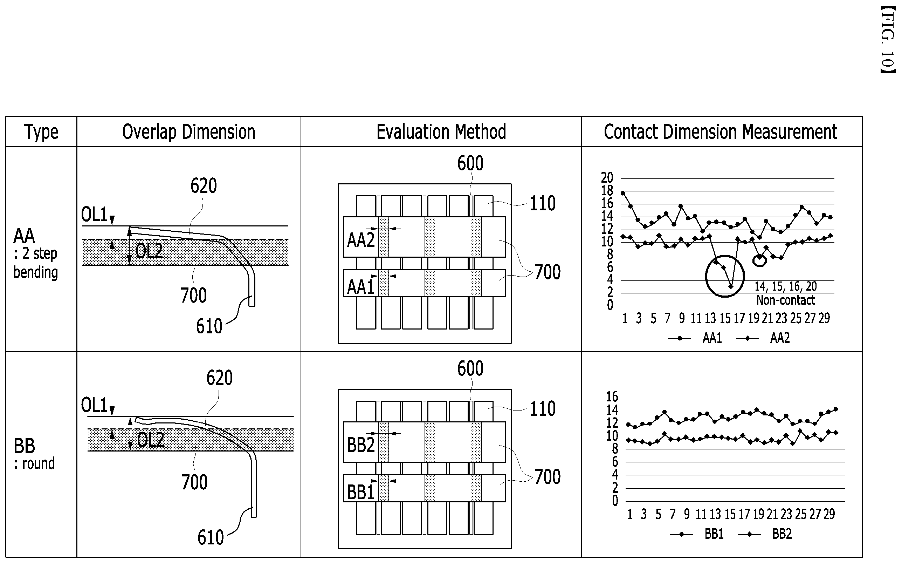

Fig. 10 is a diagram which shows the experiments and the results thereof for confirming the size of the contact surface that is formed differently depending on the shape of the cooling fin in the above-mentioned embodiments.

Referring to Fig. 10, the cooling fin 600 may be formed so as to include two flat portions having different slopes through bending without having a curvature, unlike the those described above. Hereinafter, for convenience of description, such a shape will be referred to as an AA type, and a shape having a curvature as in the present embodiment will be referred to as a BB type. Further, the cooling fin 600 used in the experiments of Fig. 10 is formed of a 10xx series aluminum material and has a thickness of 0.4 mm.

As described above, the length of the extension part 620 in the cooling fin 600 may be longer than the distance between the battery cell stack 120 and the heat sink 500, whereby the extension part 620 is deformed, and thus a heat transfer path between the cooling fin 600 and the heat sink 500 can be stably formed. A heat sink 500 may be located above the extension part 620 shown in the 'Overlap Dimension' of Fig. 10, and the lower surface of the heat sink 500 during assembly can be pressed until it is located on the dotted line, which allows the extension part 620 to be deformable to reduce its length on the z-axis. The lower surface of the heat sink 500 after assembly is located on the dotted line, and the heat dissipation layer 700 may be located in a section from the dotted line to the solid line below the dotted line.

Here, the amount of change in the length of the extension part 620 deformed by the pressure may be referred to as the first overlap length OL1, and the first overlap length OL1 of the extension part 620 shown in Fig. 10 may be about 1 mm. That is, the length of the extension part 620 on the z-axis can be designed so as to be about 1 mm greater than the distance between the battery cell stack 120 and the heat sink 500.

In addition, after assembly of the heat sink 500, the extension part 620 may make contact with the heat dissipation layer 700 formed on the lower surface of the heat sink 500, and the degree of overlap between the extension part 620 and the heat dissipation layer 700 may be referred to as a second overlap length OL2. The second overlap length OL2 may be calculated on the basis of the length of the extension part 620 before being deformed, and the second overlap length OL2 of the extension part 620 shown in Fig. 10 may be about 3 mm. That is, the thickness of the heat dissipation layer 700 used in the experiment may be about 2 mm.

Referring to the 'Evaluation Method' of Fig. 10, in order to compare the size of the contact area between the cooling fin 600 and the heat dissipation layer 700 or the heat sink 500 according to the shape of the cooling fin 600, a cooling fin 600 was inserted between plate-shaped members manufactured separately in the same manner as in the battery cell 110, the heat dissipation layer 700 was located, and then the upper surface of the heat dissipation layer 700 was pressed with an acrylic plate. Here, the plate-shaped member can correspond to the battery cell 110, and the acrylic plate can correspond to the heat sink 500.

The heat dissipation layer 700 includes two first heat dissipation layers and second heat dissipation layers having different widths, and contact lengths between the narrow first heat dissipation layer and the cooling fins 600 are represented by AA1 and BB1, and contact lengths between the wide second heat dissipation layer and the cooling fins 600 are represented by AA2 and BB2, respectively. The contact area between the cooling fins 600 and the heat dissipation layer 700 may be proportional to the size of the contact length.

Referring to "Contact Dimension Measurement" in Fig. 10, a difference in contact length according to the shape of the cooling fin 600 can be confirmed. Here, the numbers on the horizontal axis refers to each cooling fin 600, and the numbers on the vertical axis may mean length values of the contact area formed on each cooling fin 600 and the heat dissipation layer 700.

Referring to the experimental results, the overall size of the contact length was found to be larger in the AA-type cooling fins 600 than the BB-type cooling fins 600. However, in the experimental results for the AA type cooling fin 600, the deviation of contact length according to each position appeared large, and non-contact occurred at some 14th, 15th, 16th, and 20th positions. In light of these points, a problem may arise that due to design errors or assembly errors, the AA type cooling fins 600 do not contact the heat dissipation layer 700.

On the other hand, looking at the experimental results of the BB-type cooling fins 600, it can be confirmed that the deviation of the contact length formed between the respective cooling fins 600 and the heat dissipation layer 700 is not large. In addition, unlike the experimental results of the AA type cooling fins 600, non-contact did not occur.

If the size of the contact area between each cooling fin 600 and the heat dissipation layer 700 provided between the battery cells 110 is not evenly formed, the heat dissipation of some battery cells 110 is lowered and thus, the temperature deviation of the battery cell stack 120 is formed, which may make it difficult to effectively control the thermal transition or thermal runaway phenomenon. Referring to the experimental results, the AA type cooling fin 600 having a flat shape is more difficult to form a uniform contact surface with the heat dissipation layer 700 than the BB type cooling fin 600 having a round shape. Therefore, for effective heat dissipation of the battery cells 110, it may be preferable that the cooling fins 600 are provided in a round shape.

Meanwhile, although not specifically mentioned above, the cooling fins 600 according to embodiments of the present disclosure may be mounted within a battery module or a battery pack.

A battery module according to embodiments of the present disclosure includes a battery cell stack made of a plurality of battery cells and a module frame for accommodating the same, a cooling member 500 may be provided between the module frame and the battery cell stack, and a cooling fin 600 may be provided between the battery cells.

The battery pack according to embodiments of the present disclosure may be provided in various forms.

In one example, the battery pack according to embodiments of the present disclosure may include at least one or more of the battery modules described above. The battery pack of the embodiments of the present disclosure may include a pack frame and at least one battery module mounted in the pack frame, wherein the battery module includes a battery cell stack, a module frame, a cooling member 500 located between the battery cell stack and the module frame, and a cooling fin 600 provided between adjacent battery cells.

In another example, the battery pack according to the embodiments of the present disclosure may include a battery cell stack and a pack frame for accommodating the same, a cooling member 500 may be provided between the battery cell stack and the pack frame, and a cooling fin 600 may be provided between adjacent battery cells.

Here, the battery cell stack may be provided in a module-less structure that is not sealed by a module frame or the like. The battery cell stack may be provided in an open structure. At this time, the battery cell stack may be provided in a state in which its external shape is maintained through a fixing member such as a side plate or a holding strap, and this type of battery cell stack may be referred to as a cell block.

Typically, a battery pack may be formed in a dual assembling structure in which a battery module is formed by assembling a battery cell stack and several parts connected thereto, and a plurality of battery modules are again accommodated in the battery pack. At this time, since the battery module includes a module frame that forms the outer surface thereof, conventional battery cells are doubly protected by the module frame of the battery module and the pack frame of the battery pack. However, such a double assembly structure not only increases the manufacturing unit cost and manufacturing process of the battery pack, but also has the drawback that reassembly is deteriorated when some battery cells are defective. In addition, when a cooling member or the like, which is a cooling member, exists outside the battery module, there is a problem that the heat transfer path between the battery cell and the cooling member is somewhat complicated. Therefore, the battery cell stack of the present embodiment may be provided in a structure that is not sealed by the module frame, and may be directly coupled to the pack frame of the battery pack. Thereby, the structure of the battery pack becomes simpler, advantages in terms of manufacturing cost and manufacturing process can be obtained, and the weight reduction of the battery pack can be achieved. In addition, the battery cell stack herein is provided in a module-less structure, whereby the battery cell stack may be located closer to the cooling member 500 in the pack frame, and heat dissipation by the cooling member 500 may be more easily achieved.

Meanwhile, although not specifically mentioned above, the battery pack according to an embodiment of the present disclosure may include a battery management system (BMS) and/or a cooling device that manage the temperature or voltage of the battery.

The battery pack according to an embodiment of the present disclosure can be applied to various devices. The device to which the battery pack is applied may be a vehicle means such as an electric bicycle, an electric vehicle, or a hybrid vehicle. However, but the above-mentioned device is not limited thereto, and the battery pack according to the present embodiment can be used for various devices in addition to the above illustrations, which also falls within the scope of the present disclosure.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

100: battery module
110: battery cell
120: battery cell stack
130: side plate
140: holding strap
150: busbar frame
200: pack frame
300: resin layer
400: end plate
500: heat sink
600: cooling fin
700: heat dissipation layer

Preferred embodiments of the invention are specified in the following items:
[Item 1] A battery pack comprising:
   a battery module including a battery cell stack in which a plurality of battery cells are stacked,
   a pack frame for accommodating the battery module, and
   a heat sink located between the battery cell stack and the pack frame,
   wherein a cooling fin is arranged between the two battery cells adjacent to each other,
   wherein the cooling fin comprises a body part in contact with the battery cell, and an extension part extending to the upper side (z-axis) of the battery cell stack and located adjacent to the heat sink, and
   wherein the extension part has a bent part formed by bending in a direction different from the upper side (z-axis).
[Item 2] The battery pack according to Item 1, wherein:
   the heat sink is located outside the battery module, and
   the extension part makes contact with the heat sink.
[Item 3] The battery pack according to Item 1, wherein:
   the bent part formed in the extension part has an L-shaped spring shape or an S-shaped spring shape.
[Item 4] The battery pack according to Item 1, wherein:
   the cooling fin is an elastic body.
[Item 5] The battery pack according to Item 1, wherein:
   the bent part is deformable according to a distance between the battery cell stack and the heat sink.
[Item 6] The battery pack according to Item 1, further comprising:
   a heat dissipation layer formed between the battery cell stack and the heat sink.
[Item 7] The battery pack according to Item 6, wherein:
   the heat dissipation layer is disposed discontinuously in the stacking direction of the battery cell stack.
[Item 8] The battery pack according to Item 6, wherein:
   the cooling fins are formed in two or more numbers, and the two or more cooling fins are disposed at intervals from each other, and
   the heat dissipation layer is formed in plural numbers so as to correspond to the two or more cooling fins, respectively.
[Item 9] The battery pack according to Item 6, wherein:
   the heat dissipation layer makes contact with the extension part.
[Item 10] The battery pack according to Item 6, wherein:
   the heat dissipation layer is located closer to a second point, which is a terminal end of the extension part, than a first point at which the body part and the extension part make contact with each other.
[Item 11] The battery pack according to Item 6, wherein:
   the heat dissipation layer makes contact with the extension part and the heat sink.
[Item 12] The battery pack according to Item 1, wherein:
   the battery module comprises a side plate in contact with the outermost battery cell of the battery cell stack.
[Item 13] The battery pack according to Item 12, wherein:
   the side plate is configured as at least two side plates,
   the battery cell stack is disposed between the two side plates, and
   a relative positional relationship between the two side plates and the battery cell stack is fixed by a holding strap.
[Item 14] The battery pack according to Item 13, wherein:
   the holding strap comprises a hook formed at the terminal end in the longitudinal direction, and
   a hook groove corresponding to the hook is formed in the side plate.
[Item 15] A device comprising at least one battery pack according to Item 1.
[Item 16] A cooling fin that forms a heat transfer path between a battery cell and a heat sink,
   wherein the cooling fin comprises a body part located in parallel with the battery cell, and an extension part extending from one end of the body part toward the heat sink, and
   wherein the extension part has a round shape that is curved to have a curvature.
[Item 17] The cooling fin according to Item 16, wherein:
   the extension part comprises a first point having a first curvature and a second point having a second curvature, and the first curvature and the second curvature are different from each other.
[Item 18] The cooling fin according to Item 16, wherein:
   the extension part comprises a first point having a first slope and a second point having a second slope, and the first slope and the second slope are different from each other.
[Item 19] The cooling fin according to Item 18, wherein:
   the absolute value of the first slope on the cross section of the extension part is smaller than the absolute value of the second slope, and the first point is located farther from one end of the body part than the second point.
[Item 20] The cooling fin according to Item 18, wherein:
   the first point is located closer to the heat sink than the second point.
[Item 21] The cooling fin according to Item 18, wherein:
   the second point is in non-contact with the heat sink.
[Item 22] The cooling fin according to Item 16, wherein:
   the extension part is deformable according to a distance between the battery cell and the heat sink.
[Item 23] The cooling fin according to Item 16, wherein:
   the extension parts are formed in plural numbers on one cooling fin.
[Item 24] The cooling fin according to Item 16, wherein:
   a heat dissipation layer is located between the battery cell stack in which the plurality of battery cells are stacked and the heat sink, and the extension part makes contact with the heat dissipation layer.
[Item 25] The cooling fin according to Item 24, wherein:
   the heat dissipation layer is formed in plural numbers,
   the extension part is formed in plural numbers in one cooling fin, and
   the plurality of heat dissipation layers correspond to a plurality of extensions formed on one cooling fin, respectively.
[Item 26] The cooling fin according to Item 24, wherein:
   the heat dissipation layer is disposed discontinuously in the stacking direction of the battery cell stack.
[Item 27] The cooling fin according to Item 24, wherein:
   the cooling fins are formed in two or more numbers, and the two or more cooling fins are disposed at intervals from each other, and
   the heat dissipation layer is formed in plural numbers so as to correspond to the two or more cooling fins, respectively.
[Item 28] The cooling fin according to Item 24, wherein:
   the heat dissipation layer makes contact with the extension part and the heat sink.
[Item 29] A battery module comprising at least one cooling fin according to Item 16.
[Item 30] A battery pack comprising at least one cooling fin according to Item 16.

## Claims

1. A cooling fin that forms a heat transfer path between a battery cell and a heat sink,
wherein the cooling fin comprises a body part located in parallel with the battery cell, and an extension part extending from one end of the body part toward the heat sink, and
wherein the extension part has a round shape that is curved to have a curvature.

2. The cooling fin according to claim 1, wherein:
the extension part comprises a first point having a first curvature and a second point having a second curvature, and the first curvature and the second curvature are different from each other.

3. The cooling fin according to claim 1, wherein:
the extension part comprises a first point having a first slope and a second point having a second slope, and the first slope and the second slope are different from each other.

4. The cooling fin according to claim 3, wherein:
the absolute value of the first slope on the cross section of the extension part is smaller than the absolute value of the second slope, and the first point is located farther from one end of the body part than the second point.

5. The cooling fin according to claim 3, wherein:
the first point is located closer to the heat sink than the second point.

6. The cooling fin according to claim 3, wherein:
the second point is in non-contact with the heat sink.

7. The cooling fin according to claim 1, wherein:
the extension part is deformable according to a distance between the battery cell and the heat sink.

8. The cooling fin according to claim 1, wherein:
the extension parts are formed in plural numbers on one cooling fin.

9. The cooling fin according to claim 1, wherein:
a heat dissipation layer is located between the battery cell stack in which the plurality of battery cells are stacked and the heat sink, and the extension part makes contact with the heat dissipation layer.

10. The cooling fin according to claim 9, wherein:
the heat dissipation layer is formed in plural numbers,
the extension part is formed in plural numbers in one cooling fin, and
the plurality of heat dissipation layers correspond to a plurality of extensions formed on one cooling fin, respectively.

11. The cooling fin according to claim 9, wherein:
the heat dissipation layer is disposed discontinuously in the stacking direction of the battery cell stack.

12. The cooling fin according to claim 9, wherein:
the cooling fins are formed in two or more numbers, and the two or more cooling fins are disposed at intervals from each other, and
the heat dissipation layer is formed in plural numbers so as to correspond to the two or more cooling fins, respectively.

13. The cooling fin according to claim 9, wherein:
the heat dissipation layer makes contact with the extension part and the heat sink.

14. A battery module comprising at least one cooling fin according to claim 1.

15. A battery pack comprising at least one cooling fin according to claim 1.
